# EUROPEAN PATENT APPLICATION

(11) **EP 1 643 626 A2**
(43) Date of publication of application: **05.04.2006**
(21) Application number: 05020322.3
(22) Date of filing: 17.09.2005
(51) Int. Cl.: H02M 7/06

(54) **Direct current power supply apparatus and control method for the same, and a compressor drive apparatus**

(30) Priority: 22.09.2004 JP 2004275312; 20.06.2005 JP 2005178782
(71) Applicant: MATSUSHITA ELECTRIC INDUSTRIAL CO., LTD., Kadoma-shi, Osaka 571-8501 (JP)
(72) Inventor: Takeda, Yoshihiko 514 Doeruarusu Nishinomiya, Nishinomiya-shi Hyogo 662-0854 (JP); Maeda, Shiro, Otsu-shi Shiga 520-2101 (JP)
(74) Representative: Eisenführ, Speiser & Partner

(57) **Abstract**

A simple circuit arrangement reduces high frequency current and improves the input power factor in a direct current power supply apparatus having a three-phase input, a DC power supply control method, and a compressor drive apparatus using this direct current power supply apparatus. In a direct current power supply apparatus having a three-phase AC supply (1), reactors (2U, 2V 2W), a bridge rectifier circuit (3), an electrolytic capacitor (4), two-way switches (6U, 6V, 6W), capacitors (7U, 7V, 7W), a phase detection means (8) for detecting a specific phase of each phase voltage, and a two-way switch control means (9), and in a compressor drive apparatus using this direct current power supply apparatus, the two-way switches are turned on/off every half cycle of each phase voltage of the three-phase AC supply (1) to repeatedly and alternately charge and discharge the capacitors through the reactors, thereby reducing high frequency current components and improving the input power factor.

## Description

### FIELD OF THE INVENTION

The present invention relates to a direct current power supply apparatus which converts a three-phase alternating current supply to direct current while also reducing harmonic current flowing to the three-phase alternating current supply and improving input power factor. The invention also relates to a control method for this direct current power supply apparatus, and to a compressor drive apparatus which uses this direct current power supply apparatus.

### BACKGROUND OF THE INVENTION

Various methods have been used in conventional direct current (DC) power supply apparatuses that convert a three-phase alternating current (AC) supply to a DC supply current to convert the AC supply to a DC supply while maintaining the sine wave form of the three-phase AC supply in order to reduce harmonic current and improve the input power factor. More particularly, these methods typically drive switching elements at between several kilohertz to ten-plus kilohertz and control the current flow to the switching elements at high speed to track the desired reference sine wave form.

A conventional DC power supply apparatus of this type has a reactor connected to each phase of the three-phase AC supply, and a full bridge arrangement of six diode pairs and a pair of parallel connected switching elements, used in combination with an inverter circuit which drives the motor. See, for example, Japanese Unexamined Patent Application H8-331860.

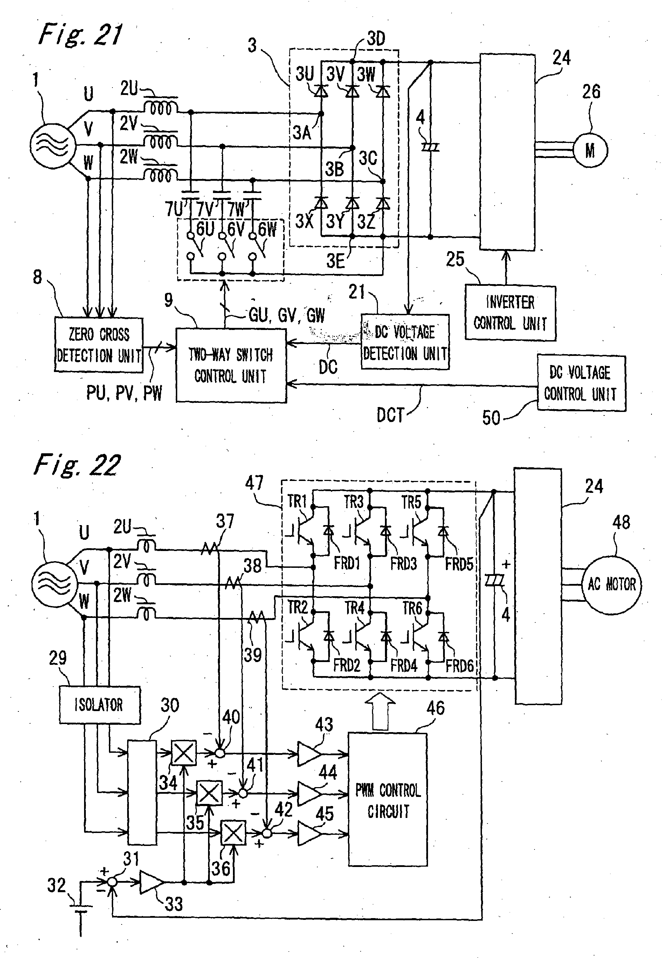

This direct current power supply apparatus according to the prior art is described next with reference to Fig. 22. Fig. 22 is a circuit diagram of a power conversion apparatus described in Japanese Unexamined Patent Application H8-331860. The main circuit configuration and operation of this power conversion apparatus are described first.
The three-phase AC supply is a commercial AC power source which is connected through reactors 2U, 2V 2W to a full-bridge converter circuit 47. The converter circuit 47 is composed of six switching elements TR1 to TR6 and high speed diodes FRD1 to FRD6 whereby an AC supply is converted to a DC supply. Electrolytic capacitor 4 smoothes the output of converter circuit 47. The smoothed DC voltage is reconverted to AC by inverter circuit 24 and supplied to AC motor 48.

Operation enabling rated voltage control of the DC voltage while holding the input power factor of current in the three-phase AC supply to substantially equal to 1 resulting in a sine wave is described next. Isolator 29 drops the inter-line voltage of the three-phase AC supply to a desired voltage level for detection in a state isolated from the AC supply. The detected inter-line voltage is converted by converter 30 to a phase voltage that is used as the reference for current flow to each phase. Voltage subtracter 31 obtains the difference between the voltage of electrolytic capacitor 4 and current-voltage reference 32.

Output from voltage difference amplifier 33 is multiplied with the phase voltages output from converter 30 by three multipliers 34 to 36. Current flow through each phase is detected by three current detectors 37 to 39, the difference between the phase current and the target for each phase current is output from three subtracters 40 to 42, and the differences are amplified by three current difference amplifiers 43 to 45. The amplified results are passed to PWM control circuit 46 and pulse width modulated.

The switching elements TR1 to TR6 are then controlled based on the output PWM signal so that the target value of each phase current output by the three multipliers 34 to 36 matches the current flow to each phase detected by current detectors 37 to 39. Each phase current can thus be controlled to a sine wave current having an input power factor of substantially 1, and the DC voltage can be controlled to a constant level.

A problem with the arrangement of this prior art direct current power supply apparatus is that it has numerous switching elements for converting AC to DC, and control is therefore also complicated. The cost is also increased by the need to use a reactor with good high frequency characteristics. Loss in the switching elements, high speed diodes, and reactor is also high because the switching elements are driven at a high frequency of several kilohertz to ten-plus kilohertz, and high frequency noise output is thus high.

Considering the foregoing problems, the present invention reduces harmonic current and improves the input power factor of the drive apparatus.

### DISCLOSURE OF THE INVENTION

To solve the foregoing problems of the prior art a direct current power supply apparatus according to the present invention connects a reactor for each phase of a three-phase AC supply between the three-phase AC supply and the AC input terminals of a bridge rectifier circuit composed of six diodes, and connects a serial connected arrangement of two-way switches and capacitors between the AC input terminal for each phase of the bridge rectifier circuit and the DC output terminal. The two-way switches are then turned on based on a specific phase of each phase voltage to repeatedly alternately charge and discharge a capacitance at the commercial power supply frequency.

Each phase current thus rises from the zero voltage cross point of each phase, and a sine wave current can be supplied to the load.

A direct current power supply apparatus for supplying direct current to a load according to a first aspect of the present invention has a three-phase AC supply; a bridge rectifier circuit composed of six diodes; an electrolytic capacitor connected to a DC output terminal of said bridge rectifier circuit; reactors connected between said three-phase AC supply and the AC input terminal for each phase of said bridge rectifier circuit; two-way switches disposed between said AC input terminals and said DC output terminal; capacitors connected in series to said two-way switches; a phase detection means for detecting a specific phase of each phase voltage of said three-phase AC supply and outputting a phase detection signal; and a two-way switch control means for controlling said two-way switches based on said phase detection signal.

In a second aspect of the invention the specific phase is a zero voltage cross point.

In a third aspect of the invention the two-way switch control means controls said two-way switches according to said zero voltage cross point and an on time command denoting the timing when said two-way switches turn on.

In a fourth aspect of the invention said capacitors are inserted between the AC input terminal of each phase and said two-way switches.

In a fifth aspect of the invention one side of said two-way switches is connected to said AC input terminal and the other side is connected through a single common capacitor to said DC output terminal.

A direct current power supply apparatus according to a sixth aspect of the invention also has a DC voltage detection means for detecting the DC output voltage of said bridge rectifier circuit and outputting the DC voltage. The two-way switch control means turns said two-way switches off when said DC voltage exceeds a specific value or becomes less than a specific value.

A direct current power supply apparatus according to a seventh aspect of the invention also has a DC voltage detection means for detecting the DC output voltage of said bridge rectifier circuit and outputting the DC voltage. The two-way switch control means controls said two-way switches based on said zero voltage cross point, said detected DC voltage, and a specific DC voltage control value so that said detected DC voltage becomes equal to said DC voltage control value.

A direct current power supply apparatus according to an eighth aspect of the invention also has a load current detection means for detecting the load current flowing through said load and outputting a load current value. The two-way switch control means controls said two-way switches based on said zero voltage cross point and said load current value.

A direct current power supply apparatus according to an ninth aspect of the invention also has an input current detection means for detecting the input current to said reactors and outputting an input current value. The two-way switch control means controls said two-way switches based on said zero voltage cross point and said input current value.

The phase detection means in a tenth aspect of the invention is composed of a single-phase zero voltage cross detection means for detecting the zero voltage cross point of one phase of said three-phase AC supply; and a two-phase zero voltage cross calculation means for calculating the zero voltage cross point of the other two phases from said zero voltage cross point detected by said single-phase zero voltage cross detection means.

The phase detection means in an eleventh aspect of the invention is composed of a inter-line voltage zero cross detection means for detecting a inter-line voltage zero cross point of said three-phase AC supply; and a three-phase zero voltage cross calculation means for calculating the zero voltage cross point of each phase from said inter-line voltage zero cross point.

The reactors in a twelfth aspect of the invention are a three-phase reactor composed of one core and three windings.

The reactors in a thirteenth aspect of the invention are saturable reactors wherein inductance drops as current flow increases.

A fourteenth aspect of the invention is a compressor drive apparatus having a direct current power supply apparatus for converting three-phase alternating current to direct current, and an inverter device for converting the direct current converted by said direct current power supply apparatus to variable voltage, variable frequency alternating current and supplying said alternating current to a compressor. The direct current power supply apparatus is composed of a three-phase AC supply; a bridge rectifier circuit composed of six diodes; an electrolytic capacitor connected to a DC output terminal of said bridge rectifier circuit; reactors connected between said three-phase AC supply and the AC input terminal for each phase of said bridge rectifier circuit; two-way switches disposed between said AC input terminals and said DC output terminal; capacitors connected in series to said two-way switches; a phase detection means for detecting a specific phase of each phase voltage of said three-phase AC supply and outputting a phase detection signal; and a two-way switch control means for controlling said two-way switches based on said phase detection signal.

The two-way switch control means in a compressor drive apparatus according to a fifteenth aspect of the invention controls said two-way switches based on said zero voltage cross point and a speed control value set by said inverter device.

A compressor drive apparatus according to a sixteenth aspect of the invention also has a compressor speed detection means for detecting the speed of said compressor. The two-way switch control means controls said two-way switches based on said zero voltage cross point and said detected compressor speed.

A control method for a direct current power supply apparatus according to a seventeenth aspect of the invention is a method of controlling a direct current power supply apparatus having a three-phase AC supply, a bridge rectifier circuit composed of six diodes, an electrolytic capacitor connected to a DC output terminal of said bridge rectifier circuit, and reactors connected between said three-phase AC supply and the AC input terminal for each phase of said bridge rectifier circuit. This control method has steps of: detecting a specific phase of each phase voltage of said three-phase AC supply; controlling the flow of current between said AC input terminal and said DC output terminal on and off based on said detected phase; and charging/discharging a capacitance by switching said current flow on and off.

Using a simple arrangement with two-way switches, a direct current power supply apparatus according to the present invention can thus regulate the current output in each phase of a three-phase AC supply to a sine wave current and reduce high frequency components. The input power factor can thus be improved. In addition, the drive frequency of the two-way switches is low, and the current flowing to the two-way switches is limited to the charge/discharge current of the capacitor. Loss and noise can thus be reduced compared with a conventional full-bridge converter circuit that operates at a high frequency.

Furthermore, because capacitors are connected in series to three two-way switches, overcurrent flow into the circuit is prevented even if the two-way switches short, and a protection circuit such as an overcurrent detection circuit or breaker circuit can be omitted. Just a single capacitor could also be used to further reduce size and weight. Equipment damage can also be reduced if the DC output voltage is abnormal.
Furthermore, the DC voltage can also be controlled to equal a DC voltage control value even when the load fluctuates, for example, and a stable DC output voltage can be maintained. The increase or decrease in the input current from the three-phase AC supply can also be controlled according to variation in the load current, and the DC output voltage can thus be stabilized.
The DC output voltage can also be stabilized even if the input current increases or decreases due to instability in the three-phase AC supply.
Cost is also reduced by simplifying the phase detection means.
The size and weight of the equipment can also be reduced by using a three-phase reactor. If a saturable reactor is used, a drop in the DC output voltage during operation with a heavy load can be prevented, and the size and weight of the reactor can be reduced.

### BRIEF DESCRIPTION OF THE DRAWINGS

Fig. 1 is a block diagram of a direct current power supply apparatus according to a first embodiment of the present invention;
Fig. 2 describes operation at the start of charging capacitor 7U in the first embodiment of the present invention;
Fig. 3 describes operation after the end of charging capacitor 7U in the first embodiment of the present invention;
Fig. 4 describes operation when capacitor 7W starts discharging in the first embodiment of the present invention;
Fig. 5 describes operation when capacitor 7W stops discharging in the first embodiment of the present invention;
Fig. 6 describes the V phase current flow after the capacitor 7W is completely discharged in the first embodiment of the present invention;
Fig. 7 is a timing chart of the phase voltage and two-way switch operation in the first embodiment of the present invention;
Fig. 8 shows the U phase voltage and U phase current in the first embodiment of the present invention;
Fig. 9 is a circuit diagram of a zero cross detection unit using a three-phase transformer;
Fig. 10 is a circuit diagram of a zero cross detection unit using a single-phase zero cross detection unit;
Fig. 11 is a circuit diagram of a zero cross detection unit using a inter-line voltage zero cross detection unit;
Fig. 12 is a block diagram of a direct current power supply apparatus according to a second embodiment of the present invention;
Fig. 13 is a waveform diagram of the U phase voltage and capacitor current in the second embodiment of the present invention;
Fig. 14 is a block diagram of a direct current power supply apparatus according to a third embodiment of the present invention;
Fig. 15 is a block diagram of a direct current power supply apparatus according to a fourth embodiment of the present invention;
Fig. 16 is a block diagram of a direct current power supply apparatus according to a fifth embodiment of the present invention;
Fig. 17 is a block diagram of a direct current power supply apparatus according to a sixth embodiment of the present invention;
Fig. 18 is a block diagram of a direct current power supply apparatus according to a seventh embodiment of the present invention;
Fig. 19 is a block diagram of a direct current power supply apparatus according to an eighth embodiment of the present invention;
Fig. 20 is a block diagram of a direct current power supply apparatus according to a ninth embodiment of the present invention;
Fig. 21 is a block diagram of a direct current power supply apparatus according to a tenth embodiment of the present invention;
Fig. 22 is a block diagram of a motor drive apparatus using a direct current power supply apparatus according to the prior art.

### DETAILED DESCRIPTION OF THE PREFERRED EMBODIMENTS

Preferred embodiments of the present invention are described below with reference to the accompanying figures wherein elements that are the same as in the foregoing prior art are identified by the same reference numerals and further description thereof is omitted below. The following descriptions of the preferred embodiments are offered by way of example only and the present invention shall not be limited thereto. Furthermore, the numbers used in describing these preferred embodiments are by way of example only, and the invention shall also not be limited thereto.

### Embodiment 1

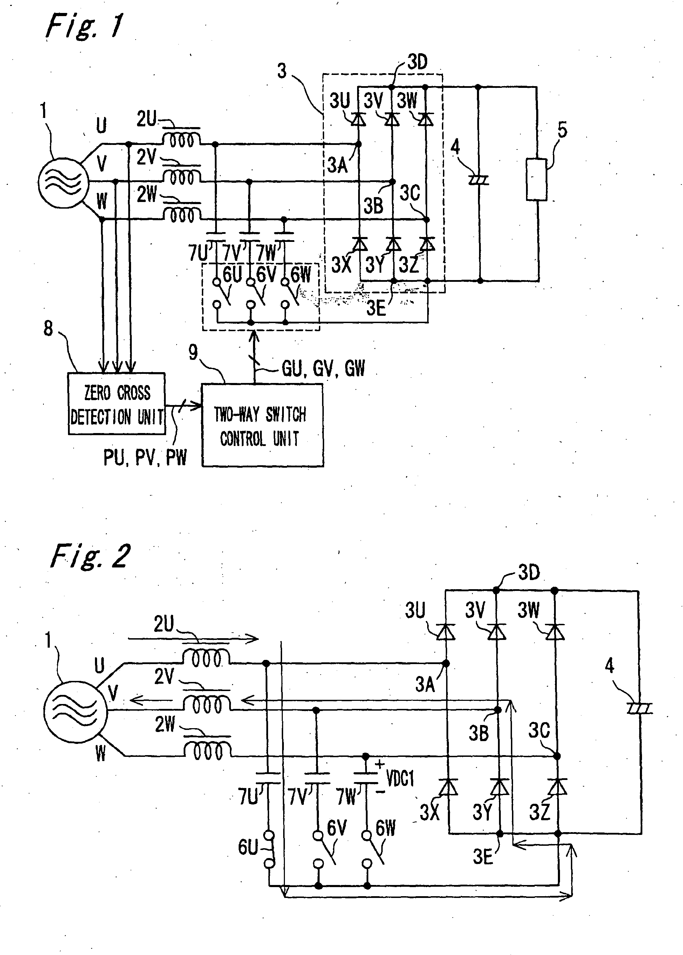

Fig. 1 is a block diagram of a direct current power supply apparatus according to a first embodiment of the present invention.

Referring to Fig. 1, each phase U, V; W of three-phase AC supply 1 is connected through a corresponding reactor 2U, 2V 2W to the AC input terminals 3A, 3B, 3C of a bridge rectifier circuit 3 composed of diodes 3U, 3V, 3W, 3X, 3Y, 3Z. An electrolytic capacitor 4 is connected between the positive DC output terminal 3D and the negative DC output terminal 3E of the bridge rectifier circuit 3, and a load 5 is parallel connected to the electrolytic capacitor 4. One side of each two-way switch 6U, 6V, 6W is connected to the negative DC output terminal 3E of bridge rectifier circuit 3, and the other side of each switch is connected to a corresponding capacitor 7U, 7V, 7W.

The other side of each capacitor 7U, 7V, 7W is connected to the corresponding AC input terminal 3A, 3B, 3C of the bridge rectifier circuit 3.
Zero cross detection unit 8 detects the zero cross of each phase voltage of the three-phase AC supply 1, and outputs zero cross signals PU, PV, PW denoting the zero cross of each voltage. Two-way switch control unit 9 generates on time commands GU, GV, GW for each phase based on the detected zero cross signals PU, PV, PW to control the two-way switches 6U, 6V, 6W. These on time commands GU, GV, GW denote the timing when the corresponding two-way switches 6U, 6V, 6W turn on.

The zero cross detection unit 8 and zero cross signals PU, PV, PW are examples of a phase detection unit 8 and phase detection signals PU, PV, PW. The phase detection unit 8 detects a specific phase in each phase voltage of the three-phase AC supply 1, and outputs phase detection signals PU, PV, PW. The two-way switch control unit 9 generates on time commands GU, GV, GW for each phase based on the detected phase detection signals PU, PV, PW to control two-way switches 6U, 6V, 6W. In addition to the zero cross of each phase voltage, the specific phase is preferably any easily detectable phase such as 90° or 270°. The timing of the specific phase point and the on time commands GU, GV, GW can be varied by a specific delay time.

Note that zero cross detection unit 8 and zero cross signals PU, PV, PW are used by way of example as the phase detection unit 8 and phase detection signals PU, PV, PW used in each of the embodiments described below.

The phase voltages VU, W, VW of the three-phase AC supply 1 and the phase input currents IU, IV, IW flowing through the reactors 2U, 2V 2W work through the reactors 2U, 2V 2W with the bridge rectifier circuit 3. The operation and action thereof are described next with reference to Fig. 2 to Fig. 7. To simplify the following description, the capacitors 7U, 7V, 7W repeatedly charge and discharge between zero volts and a specified voltage VDC 1. The initial phase of the three-phase AC supply 1 is the phase at the zero voltage cross point of the rising edge of the U phase. The U-phase input current IU based on the U-phase voltage VU of the three-phase AC supply 1 is described as flowing in each phase, and the contribution of the V-phase input current IV based on the V-phase voltage W and the W-phase input current IW based on the W-phase voltage VW on each phase is ignored.

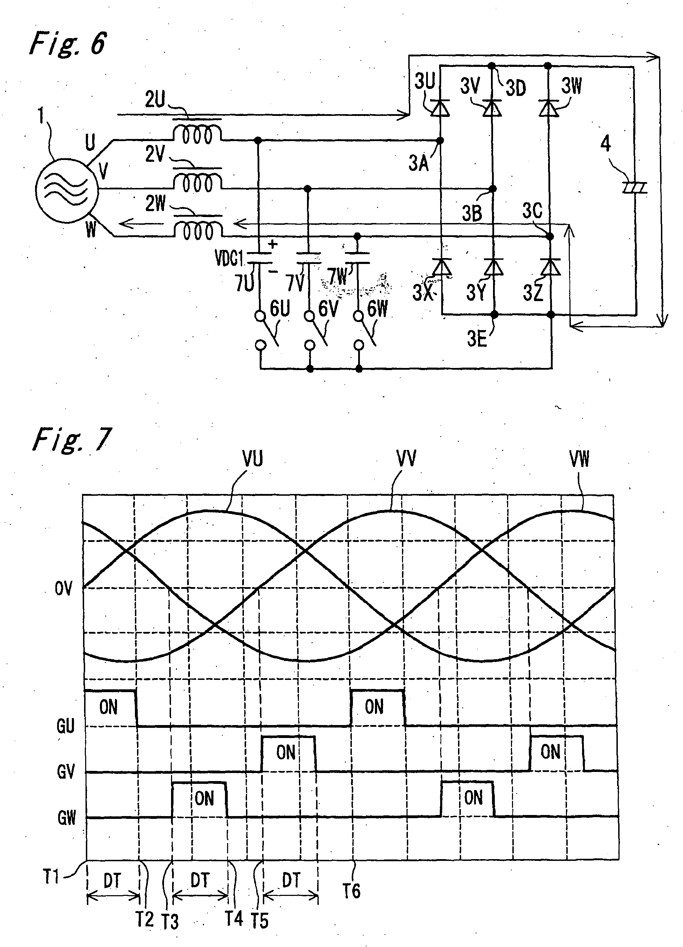

Fig. 2 to Fig. 6 show the change over time in the U-phase input current IU flowing from the three-phase AC supply 1 to the bridge rectifier circuit 3. Fig. 7 is a timing chart showing the relationship between the phase voltages VU, W, VW in one period from the zero voltage cross point of the U-phase voltage VU and the on time commands GU, GV, GW.

At time T1 the zero cross detection unit 8 detects the zero voltage cross point of the rising edge of the U phase of the three-phase AC supply 1. The two-way switch control unit 9 generates on time command GU, which goes to the operating level only for switch ON time DT from the zero voltage cross point of the U phase rise, to control two-way switch 6U. As a result, two-way switch 6U is on only for the switch ON time DT from the zero voltage cross point of the U phase rise. As shown by the arrows in Fig. 2, the charge current flow through capacitor 7U at this time passes from the U phase of three-phase AC supply 1 through reactor 2U to charge the capacitor 7U, and then returns through diode 3Y and reactor 2V to the V phase of the three-phase AC supply 1.

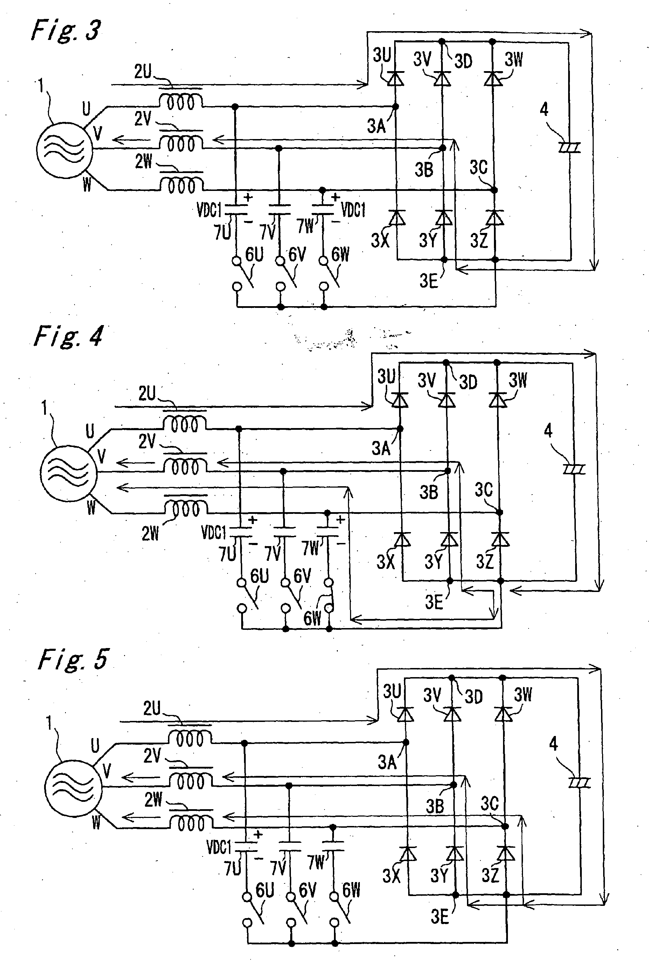

At time T2 after switch ON time DT, capacitor 7U is charged to specified voltage VDC1 and two-way switch 6U goes off, but U-phase input current IU and V-phase input current IV continue to flow to reactor 2U and reactor 2V. As a result, U-phase input current IU passes from the U phase supply to reactor 2U and diode 3U and charges electrolytic capacitor 4, and then returns to the V phase through diode 3Y and reactor 2V as shown by the arrows in Fig. 3.

At time T3 the zero cross detection unit 8 detects the zero voltage cross point of the fall of the W phase. The two-way switch control unit 9 generates on time command GW, which goes to the operating level only for the switch ON time DT from the detected W voltage zero cross point, to control two-way switch 6W. As shown by the arrows in Fig. 4, U-phase input current IU flows from capacitor 7W, which is charged to VDC1, through reactor 2W, and a discharge current discharged to electrolytic capacitor 4 is added from the U phase of three-phase AC supply 1 through reactor 2U and diode 3U. U-phase input current IU continues to be added during this time.

The voltage of capacitor 7W goes to zero volts at time T4 after switch ON time DT. When two-way switch 6W thus goes off, the U-phase input current IU that had been flowing through reactor 2U flows through diode 3U and charges electrolytic capacitor 4 while V-phase input current IV and W-phase input current IW are reverse polarity to U-phase input current IU as shown by the arrows in Fig. 5, splits into two channels through diode 3Y and reactor 2V and diode 3Z and reactor 2W, and returns to reactor 2U through three-phase AC supply 1. If V-phase input current IV becomes the same polarity as U-phase input current IU at time T5, the U-phase input current IU flowing through reactor 2U as shown in Fig. 6 charges electrolytic capacitor 4 through diode 3U, passes diode 3Z and reactor 2W, and returns through three-phase AC supply 1 to reactor 2U. U-phase input current IU continues to decrease monotonically until the current value goes to zero at time T6.

Operation of this direct current power supply apparatus has been described above focusing on the U-phase input current IU, but it will be obvious that the behavior of the other phase currents is the same. Each phase input current IU, IV, IW starts flowing from the zero voltage cross point of that phase, continues increasing until the phase voltage VU, W, VW reaches a peak level, and then decreases in conjunction with the phase voltage VU, W, VW. As a result, the waveform of each phase input current IU, IV, IW is a sine wave with a waveform and phase substantially equal to the phase voltage VU, W, VW, thus reducing harmonic currents and improving the input power factor. As shown in Fig. 7, the capacitor 7U, 7V, 7W for each phase is charged to a specified voltage VDC1 during the positive half cycle of the phase voltages VU, W, VW during the switch ON time DT of the corresponding on time command GU, GV, GW, and is charged to 0 V during the negative half cycle.

Because a capacitor 7U, 7V, 7W is connected in series to the two-way switch 6U, 6V, 6W connected to each phase in this first embodiment, excess current will not flow in the direct current power supply apparatus even if the two-way switches 6U, 6V, 6W malfunction or short An overcurrent detection circuit and protection circuit such as a breaker circuit that operates when excess current is supplied can thus be omitted.

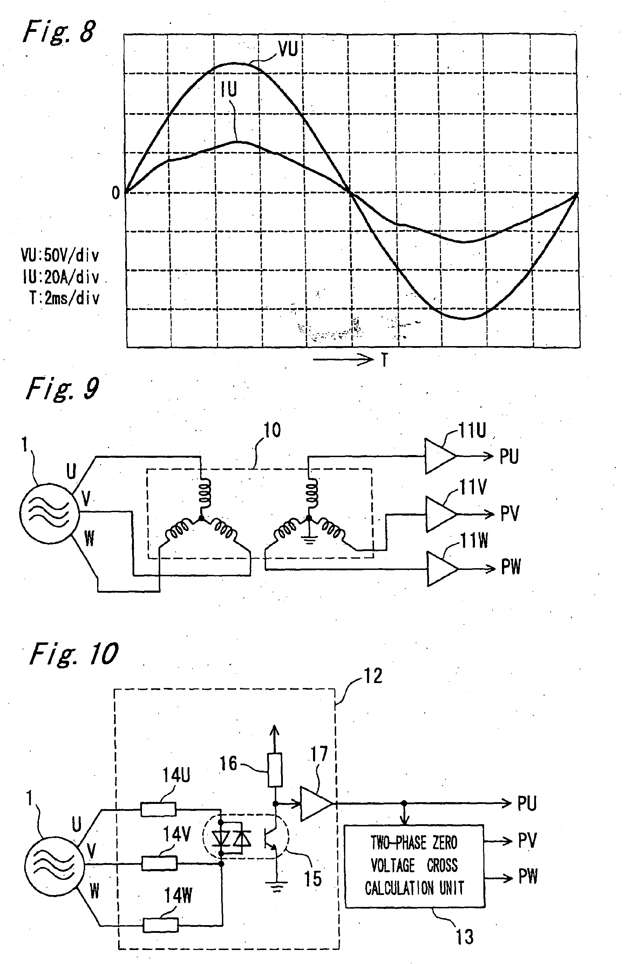

Fig. 8 shows the simulated waveforms of U-phase voltage VU and U-phase input current IU when the three-phase AC supply 1 inter-line voltage is 200 V, the inductance of each reactor 2U, 2V 2W is 8 mH, the capacitance of each capacitors 7U, 7V, 7W is 100 uF, the capacitance of the electrolytic capacitor 4 is 4.7 mF, switch ON time DT is 2 mS, and a 12.9 Q resistance is connected as the load 5. Both electrolytic capacitor 4 terminal voltages are 271 V at this time, input power is 6 kW, the input power factor is 99.8%, and U-phase input current IU distortion is 5.1 %. That the input power factor is substantially 1 and distortion in the current waveform is extremely small demonstrate that this first embodiment of the invention significantly reduces harmonics and improves the input power factor.

It will also be obvious that one side of each two-way switch 6U, 6V, 6W is connected to negative DC output terminal 3E of the bridge rectifier circuit 3 in this first embodiment of the present invention, but the same effect will be achieved if the two-way switches 6U, 6V, 6W are connected to the positive DC output terminal 3D. The same effect will also be achieved if the location of the capacitors 7U, 7V, 7W and two-way switches 6U, 6V, 6W is reversed.

The two-way switches 6U, 6V, 6W also turn on at the zero voltage cross timing of each phase in this first embodiment of the present invention. However, when the inductance of the reactors 2U, 2V 2W is high or the load is high, the power factor of the phase input currents IU, IV, IW is delayed and the two-way switches 6U, 6V, 6W will not switch at the zero current cross. To avoid this problem, the two-way switch control unit 9 can be configured to delay the timing at which the two-way switches 6U, 6V, 6W turn on a specific delay time from the zero voltage cross point.

Furthermore, the two-way switches 6U, 6V, 6W turn on after a specific delay time from the zero voltage cross point and remain on only for switch ON time DT in this first embodiment of the present invention. However, the two-way switch control unit 9 could be configured to determine the timing at which the on operation stops referenced to the zero voltage cross point, and then count switch ON time DT back from this off timing to determine when the switches turn on. This arrangement makes it possible to control the delay from the zero voltage cross point to when the switches turn on.

Fig. 9 is a circuit diagram showing a specific example of the zero cross detection unit 8. As shown in Fig. 9, the zero cross detection unit 8 has a three-phase transformer 10 with both primary and secondary stages connected wired in a star configuration to isolate and drop the phase voltages VU, VV, VW for detection, and zero cross comparators 11U, 11V, 11W.

As shown in Fig. 10, however, the zero cross detection unit 8 could be composed of a single-phase zero voltage cross detection unit 12 and a two-phase zero voltage cross calculation unit 13. The single-phase zero voltage cross detection unit 12 detects the zero voltage cross point of any one phase of the three-phase AC supply 1, and the two-phase zero voltage cross calculation unit 13 calculates the zero voltage cross point of the other two phases from the zero voltage cross point of the detected phase.

The single-phase zero voltage cross detection unit 12 is composed of voltage dividing resistances 14U, 14V, 14W, photocoupler 15, pull-up resistance 16, and delay circuit 17. The voltage dividing resistances 14U, 14V, 14W acquire the pseudo-neutral point of each phase U, V, W of the three-phase AC supply 1. The photocoupler 15 is connected in series to the primary side of voltage dividing resistance 14U, and generates a zero cross pulse with a center at the zero voltage cross point of the U phase voltage as a result of the secondary side transistor going on when current exceeding a specified level flows to the voltage dividing resistance 14U. The delay circuit 17 then delays output a specified time so that the timing of the falling edge of the voltage of the zero cross pulse matches the zero voltage cross point.

The two-phase zero voltage cross calculation unit 13 then calculates the frequency of the three-phase AC supply 1 from the period of the U phase zero voltage cross point detected by the single-phase zero voltage cross detection unit 12, and calculates time DTS1 equivalent to a 120° phase angle from the calculated frequency. The two-phase zero voltage cross calculation unit 13 then outputs zero cross signals PU, PV, PW denoting the zero voltage cross point of each phase to the two-way switch control unit 9 where the pulse delayed time DTS1 from the U phase zero voltage cross point is output as the V phase zero voltage cross point and the pulse delayed an additional time DTS1 is output as the W phase zero voltage cross point.

By arranging the zero cross detection unit 8 as shown in Fig. 10, the zero voltage cross point of each phase can be detected without requiring a three-phase transformer 10 for isolating and detecting reach phase voltage from the three-phase AC supply 1, thus enabling a reduction in both size and cost.

As also shown in Fig. 10, delay circuit 17 also delays the output of photocoupler 15. However, output could also be delayed by the timing at which the two-way switches 6U, 6V, 6W turn on. In this case the delay circuit 17 can be omitted, and the output of the secondary side transistor voltage of photocoupler 15 can be used as the output of the single-phase zero voltage cross detection unit 12.

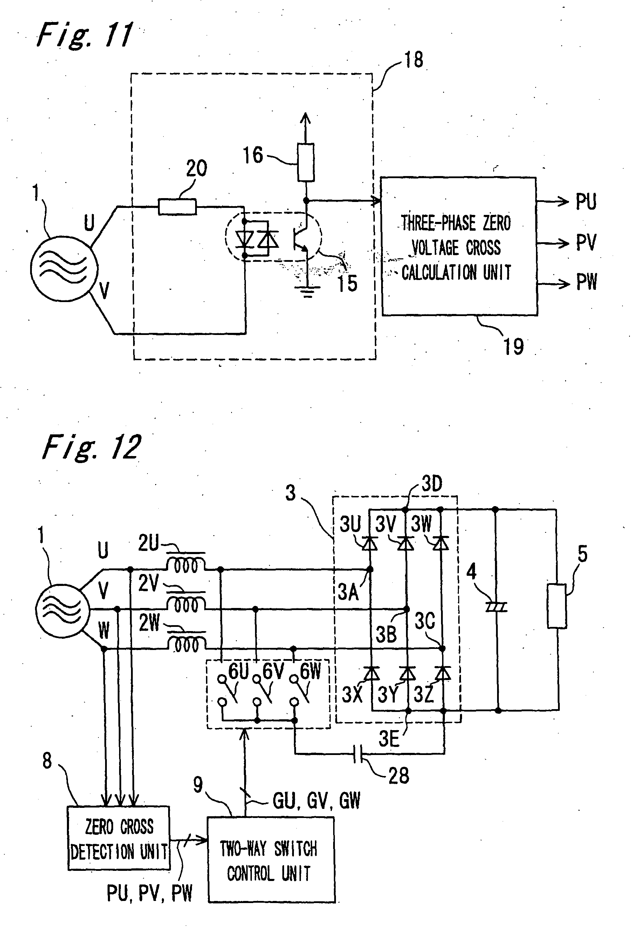

Yet further alternatively as shown in Fig. 11, the zero cross detection unit 8 could be composed of a inter-line voltage zero cross detection unit 18 which detects the zero cross of the U-V inter-line voltage of the three-phase AC supply 1, and a three-phase zero voltage cross calculation unit 19 which calculates the zero voltage cross point of each of the three phases from the U-V inter-line zero voltage cross point.

In this variation of the first embodiment the inter-line voltage zero cross detection unit 18 is composed of detection resistance 20 connected between the U and V phases of the three-phase AC supply 1, photocoupler 15, and pull-up resistance 16. The primary side of the photocoupler 15 is connected in series to the detection resistance 20. When current exceeding a specified level flows to the detection resistance 20, the secondary side transistor turns on and the photocoupler 15 thus outputs a zero cross pulse with a center at the zero voltage cross point of the U-V inter-line voltage.

Because the photocoupler 15 outputs a zero cross pulse centered at the inter-line voltage zero cross point, three-phase zero voltage cross calculation unit 19 uses the center point of the zero cross pulse width as the U-V inter-line zero voltage cross point.

The three-phase zero voltage cross calculation unit 19 then calculates the frequency of the three-phase AC supply 1 from the period of this zero cross pulse, and calculates time DTS1 equivalent to a 120° phase angle and time DTS2 equivalent to a 130° phase angle from the calculated frequency. The three-phase zero voltage cross calculation unit 19 then outputs the point delayed time DTS2 from the U-V inter-line zero voltage cross point as the U phase zero voltage cross point, the point delayed a further time DTS1 as the V phase zero voltage cross point, and the point delayed yet further time DTS1 as the W phase zero voltage cross point.

By arranging the zero cross detection unit 8 as shown in Fig. 11, the zero voltage cross point of each phase can be detected without requiring a three-phase transformer 10 for isolating and detecting each phase voltage from the three-phase AC supply 1. Processing by the three-phase zero voltage cross calculation unit 19 is more complicated, but the size and cost can be reduced compared with the arrangement shown in Fig. 10.

An advantage of this arrangement is that the delay time from the zero voltage cross point to when the two-way switches 6U, 6V, 6W turn on can be desirably set according to the circuit characteristics.

Three reactors 2U, 2V 2W are used in this first embodiment of the present invention, but a three-phase reactor with one core and windings on three legs could be used. Because the sum of the current of each phase is zero in a three-phase reactor, a three-phase reactor offers the benefit of being able to use a smaller core to achieve the same inductance compared with using three single phase reactors, and the overall size and weight of the apparatus can thus be reduced.

The voltage at both ends of the reactors 2U, 2V 2W is not a sine wave in this first embodiment of the present invention because the two-way switches 6U, 6V, 6W intermittently charge and discharge the capacitors 7U, 7V, 7W as described with reference to Fig. 2 to Fig. 7. However, the input current from the three-phase AC supply 1 is a sine wave, there is no path for zero phase current flow, the current sum always zero, and a three-phase reactor can thus be used.

The inductance characteristic of the reactors 2U, 2V 2W is not specifically limited in this first embodiment of the present invention. However, the inductance characteristic can be set so that the inductance drops when a specific current value is exceeded, and the reactors 2U, 2V 2W can be used as so-called saturable reactors.

This prevents a DC output voltage drop caused by a voltage drop in the reactors 2U, 2V 2W when, for example, the voltage of the three-phase AC supply 1 drops under a heavy load. A phase shift between the input current and the phase of the supply voltage also occurs simultaneously to a drop in the DC output voltage, but a resulting drop in the power factor can also be prevented.

### Embodiment 2

Fig. 12 is a block diagram of a direct current power supply apparatus according to a second embodiment of the present invention.

The arrangement of this second embodiment shown in Fig. 12 differs from the direct current power supply apparatus of the foregoing first embodiment in that the locations of the capacitors 7U, 7V, 7W and the two-way switches 6U, 6V, 6W are reversed, and the capacitors 7U, 7V, 7W are collectively disposed as a single capacitor 28.

The on operation control and on timing of the two-way switches 6U, 6V, 6W, and the current flow to the two-way switches 6U, 6V, 6W and bridge rectifier circuit 3 in this second embodiment are the same as in the foregoing first embodiment of the present invention, and the effect of improving the input power factor and reducing harmonics are also the same. This second embodiment differs from the first embodiment in that the current flow to the individual capacitors 7U, 7V, 7W in the first embodiment is directed to the single capacitor 28 in this second embodiment of the present invention, and the phase in which charge current flows to the capacitor 28 and the phase in which discharge current flows from the capacitor 28 are different.

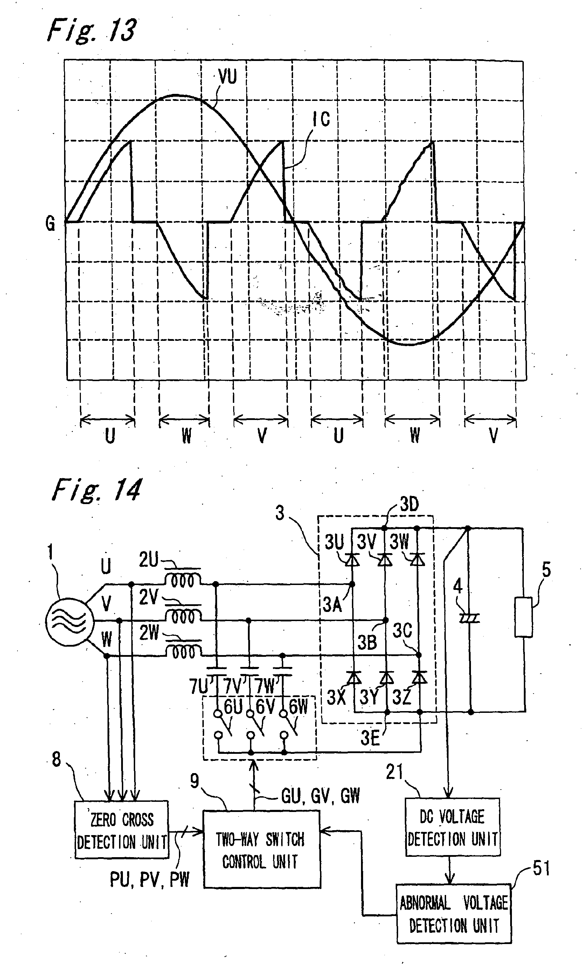

These differences are further described below with reference to Fig. 13, which shows the U-phase voltage VU and current IC flow through capacitor 28. As described above, the current flow through the capacitors 7U, 7V, 7W inverts between charge and discharge levels every positive/negative half cycle of the supply frequency in the first embodiment. As shown in Fig. 13, however, current equal to three times the supply frequency flows through the capacitor 28 in this second embodiment of the present invention.

When the U phase two-way switch 6U goes on, the capacitor 28, which is charged by the U phase charge current, works to pass the W phase discharge current to the W phase through two-way switch 6W, which turns on next. After the V phase charge current flows from the V phase, the U phase discharge current flows to the U phase, the W phase charge current then flows from the W phase, and the V phase discharge current flows to the V phase, thus completing one operating cycle. This second embodiment of the present invention thus differs from the first embodiment in that the phase supplying the charge current and the phase passing the resulting charge as the discharge current differ.

The current capacity of the capacitor 28 must be greater in this second embodiment compared with the capacitors 7U, 7V, 7W of the first embodiment, and a protection circuit for preventing an overcurrent flow to the two-way switches 6U, 6V, 6W cannot be omitted as in the first embodiment. However, this second embodiment enables eliminating two capacitors, and is thus beneficial when small size is a priority.

It will also be obvious to one with ordinary skill in the related art that the capacitor 28 is connected to the negative DC output terminal 3E of the bridge rectifier circuit 3 in this second embodiment of the present invention, but the same effect can be achieved if the capacitor 28 is connected to the positive DC output terminal 3D. Embodiment 3

Fig. 14 is a block diagram of a direct current power supply apparatus according to a third embodiment of the present invention.

As shown in Fig. 14, the arrangement of this third embodiment differs from the first embodiment shown in Fig. 1 by the addition of a DC voltage detection unit 21 for detecting the DC output voltage at both ends of electrolytic capacitor 4, and an abnormal voltage detection unit 51 for detecting a problem with the detected DC voltage.

Normal operation of this third embodiment is the same as the first embodiment. The two-way switches 6U, 6V, 6W are controlled by the two-way switch control unit 9, thus improving the input power factor and reducing harmonic currents while supplying DC power to the load 5.

Rapid changes in the load 5 or incorrect operation of the two-way switch control unit 9 could cause an abnormal rise or abnormal drop in the DC output voltage. In this third embodiment of the present invention, however, the abnormal voltage detection unit 51 detects that the DC voltage detected by the DC voltage detection unit 21 is abnormal and directs the two-way switch control unit 9 to turn the two-way switches 6U, 6V, 6W off. By thus stopping operation of the power supply apparatus when the DC output voltage is abnormal, this third embodiment of the present invention prevents equipment damage.

### Embodiment 4

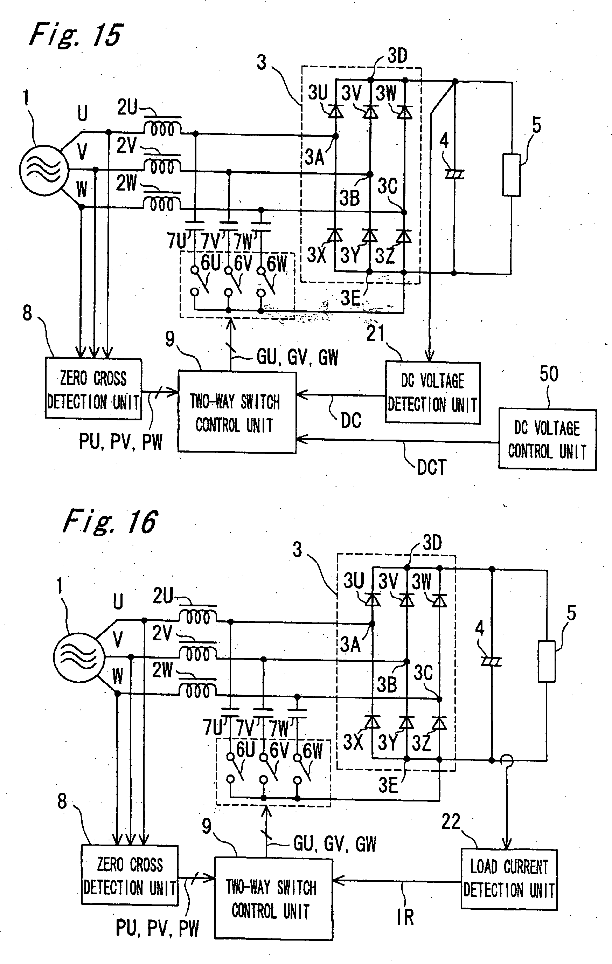

Fig. 15 is a block diagram of a direct current power supply apparatus according to a fourth embodiment of the present invention.

The arrangement of this embodiment shown in Fig. 15 differs from the direct current power supply apparatus of the first embodiment shown in Fig. 1 in additionally comprising a DC voltage detection unit 21 for detecting the DC output voltage at both ends of the electrolytic capacitor 4, and a DC voltage control unit 50 for setting DC voltage control value DCT. In addition, input to the two-way switch control unit 9 includes the zero cross signals PU, PV, PW of each phase detected by the zero cross detection unit 8, DC voltage DC detected by the DC voltage detection unit 21, and DC voltage control value DCT set by the DC voltage control unit 50.

Operation of this embodiment is described below. This fourth embodiment of the present invention is the same as the first embodiment in turning the corresponding two-way switch 6U, 6V, 6W from the zero voltage cross point of each phase. In this fourth embodiment, however, switch ON time DT is not constant and instead is variably controlled so that the DC voltage DC detected by the DC voltage detection unit 21 matches the DC voltage control value DCT set by the DC voltage control unit 50.

More specifically, if the detected DC voltage DC is less than the DC voltage control value DCT, the switch ON time DT of two-way switches 6U, 6V, 6W is increased, but if the detected DC voltage DC is greater than DC voltage control value DCT, the switch ON time DT is decreased. As a result of the two-way switch control unit 9 operating in this way the input power factor can be improved and harmonics reduced while maintaining a stable DC output voltage from the bridge rectifier circuit 3 even when the load 5 varies or the three-phase AC supply 1 voltage varies.

It should be noted that the DC voltage control value DCT of this fourth embodiment could be a specified constant value or a variable value, in which case the DC output voltage of the bridge rectifier circuit 3 can be variably controlled by a signal externally supplied to the direct current power supply apparatus.

### Embodiment 5

Fig. 16 is a block diagram of a direct current power supply apparatus according to a fifth embodiment of the present invention.

The arrangement of this embodiment shown in Fig. 16 differs from the direct current power supply apparatus of the first embodiment shown in Fig. 1 in additionally comprising a load current detection unit 22 for detecting current flow to the load 5. In addition, input to the two-way switch control unit 9 includes the zero cross signals PU, PV, PW of each phase detected by the zero cross detection unit 8, and the load current IR detected by the load current detection unit 22.

Operation of this embodiment is described below. This fifth embodiment of the present invention is the same as the first embodiment in turning the corresponding two-way switch 6U, 6V, 6W from the zero voltage cross point of each phase. In this embodiment, however, switch ON time DT is not constant and instead is variably controlled according to the load current IR detected by the load current detection unit 22.

More specifically, if the detected load current IR is high, the switch ON time DT of two-way switches 6U, 6V, 6W is increased, but if the load current IR is low, the switch ON time DT is decreased. As a result of the two-way switch control unit 9 operating in this way the input power factor can be improved and harmonics reduced while making it possible to control input current based on change in the load 5.

### Embodiment 6

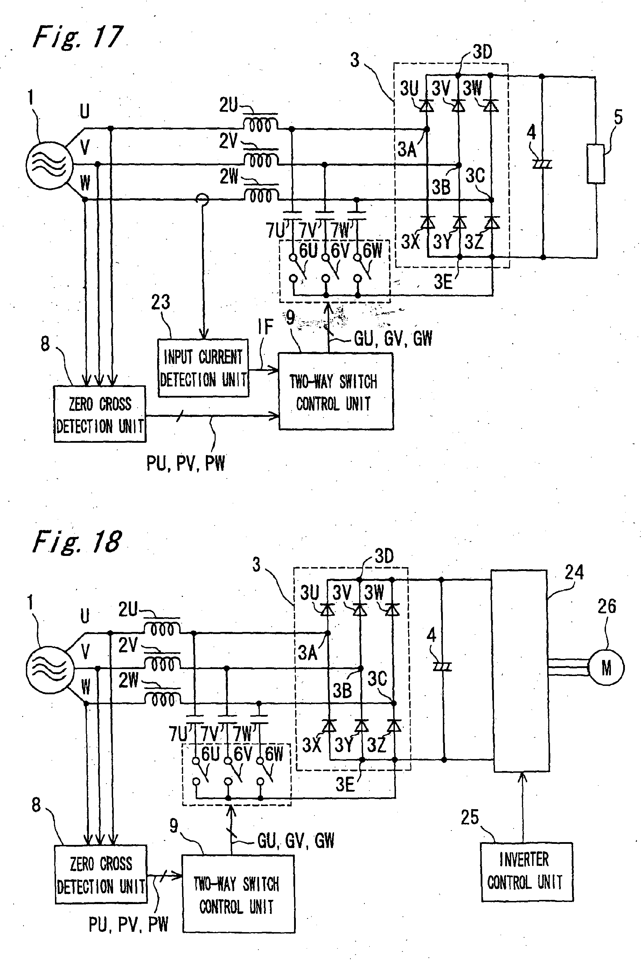

Fig. 17 is a block diagram of a direct current power supply apparatus according to a sixth embodiment of the present invention.

The arrangement of this embodiment shown in Fig. 17 differs from the direct current power supply apparatus of the first embodiment shown in Fig. 1 in additionally comprising an input current detection unit 23 for detecting the input current to the three-phase AC supply 1. In addition, input to the two-way switch control unit 9 includes the zero cross signals PU, PV, PW of each phase detected by the zero cross detection unit 8, and the input current value IF detected by the input current detection unit 23.

Operation of this embodiment is described below. This fifth embodiment of the present invention is the same as the first embodiment in turning the corresponding two-way switch 6U, 6V, 6W from the zero voltage cross point of each phase. In this embodiment, however, switch ON time DT is not constant and instead is variably controlled according to the input current value IF detected by input current detection unit 23.

More specifically, if the detected input current value IF is high, the switch ON time DT of two-way switches 6U, 6V, 6W is increased, but if the input current value IF is low, the switch ON time DT is decreased. As a result of the two-way switch control unit 9 operating in this way the input power factor can be improved and harmonics reduced while making it possible to control input current based on change in the load 5.

It should be noted that the current of only one phase of the three-phase AC supply 1 is detected in the arrangement shown in Fig. 17 because current flow to each phase is substantially equal. It will be obvious, however, that the current of two or three phases could be detected considering phase current imbalances resulting from an imbalance in the arrangement of the three-phase AC supply 1, or use in conjunction with overcurrent detection.

### Embodiment 7

Fig. 18 is a block diagram of a compressor drive apparatus according to a seventh embodiment of the present invention.

The compressor drive apparatus shown in Fig. 18 differs from the direct current power supply apparatus of the first embodiment in that the load 5 of the direct current power supply apparatus is replaced by an inverter circuit 24, an inverter control unit 25, and a compressor 26 driven by the inverter circuit 24. The inverter circuit 24 and inverter control unit 25 are collectively called an inverter device. This inverter device converts the direct current converted by the direct current power supply apparatus to a variable voltage, variable frequency alternating current supply, and supplies this AC current to the compressor 26.

The operation whereby the AC power of the three-phase AC supply 1 is converted to DC power is the same in this seventh embodiment as in the first embodiment. The two-way switch control unit 9 controls the two-way switches 6U, 6V, 6W to improve the input power factor and reduce harmonic current while supplying DC power to the inverter circuit 24. The inverter control unit 25 drives the inverter circuit 24 to convert DC to AC to drive the compressor 26.

Note that as described in the second embodiment, the three capacitors 7U, 7V, 7W can also be combined into a single capacitor 28 in this seventh embodiment, thus reducing the overall size and weight of the apparatus.

### Embodiment 8

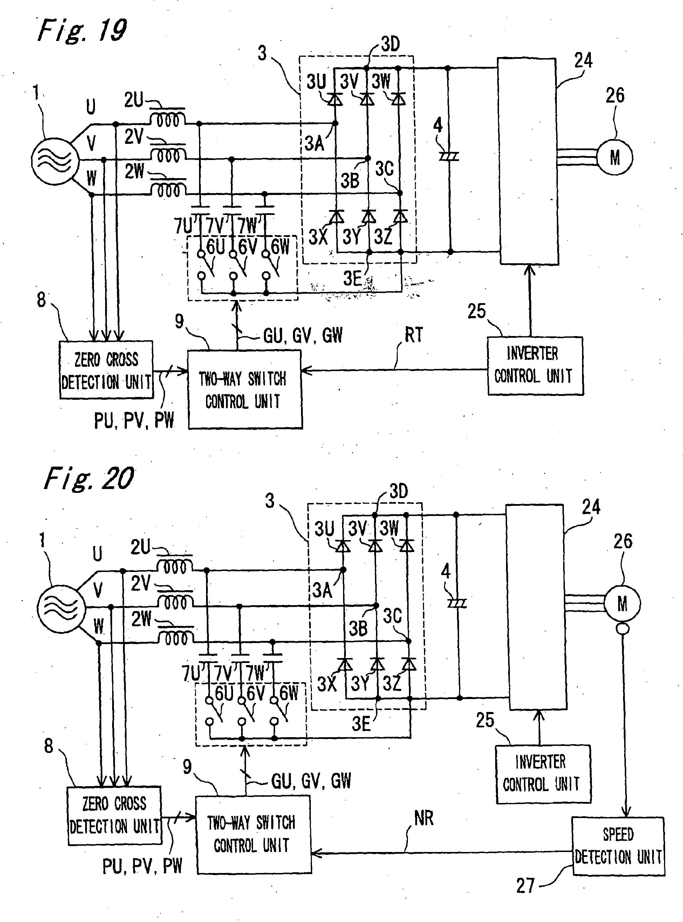

Fig. 19 is a block diagram of a compressor drive apparatus according to an eighth embodiment of the present invention.

The compressor drive apparatus shown in Fig. 19 differs from the compressor drive apparatus of the seventh embodiment in that the inverter control unit 25 outputs speed control value RT to the two-way switch control unit 9.

The operation whereby this eighth embodiment converts the AC power of the three-phase AC supply 1 to DC power by turning the corresponding two-way switch 6U, 6V, 6W from the zero voltage cross point of each phase is the same as described in the first embodiment. This embodiment differs, however, in that the switch ON time DT is not constant, but instead is variably controlled according to the speed control value RT U phase from the inverter control unit 25 to the compressor 26.
More specifically, when the speed indicated by the speed control value RT supplied to the two-way switch control unit 9 is high, the switch ON time DT of the two-way switches 6U, 6V, 6W is increased, and when the speed control value RT is low, the switch ON time DT is decreased.

By thus operating the two-way switch control unit 9, the input can be controlled according to change in the load of the inverter circuit 24 while improving the input power factor and reducing harmonic components.

### Embodiment 9

Fig. 20 is a block diagram of a direct current power supply apparatus according to a ninth embodiment of the present invention.

Fig. 20 differs from the block diagram of a compressor drive apparatus according to the seventh embodiment in additionally having a speed detection unit 27 for detecting the speed NR of the compressor 26.

The operation whereby this ninth-embodiment converts the AC power of the three-phase AC supply 1 to DC power by turning the corresponding two-way switch 6U, 6V, 6W on from the zero voltage cross point of each phase is the same as described in the first embodiment. In this ninth embodiment, however, the switch ON time DT is not constant but is variably controlled according to the speed NR of the compressor 26 detected by the speed detection unit 27.

More specifically, when the speed NR of the compressor 26 supplied to the two-way switch control unit 9 is high, the switch ON time DT of the two-way switches 6U, 6V, 6W is increased, and when the speed NR is low, the switch ON time DT is decreased.

By thus operating the two-way switch control unit 9, input current can be controlled according to variations in the inverter circuit 24 load while improving the input power factor and reducing harmonic components.

### Embodiment 10

Fig. 21 is a block diagram of a direct current power supply apparatus according to a tenth embodiment of the present invention.

Fig. 21 differs from the block diagram of a compressor drive apparatus according to the seventh embodiment in additionally having a DC voltage detection unit 21 and DC voltage control unit 50 as in the fourth embodiment.

The operation whereby this tenth embodiment converts the AC power of the three-phase AC supply 1 to DC power by turning the corresponding two-way switch 6U, 6V, 6W on from the zero voltage cross point of each phase is the same as described in the sixth embodiment. In this tenth embodiment, however, the switch ON time DT is not constant but is variably controlled so that the DC voltage DC detected by the DC voltage detection unit 21 matches the DC voltage control value DCT set by the DC voltage control unit 50.

More specifically, if the DC voltage DC detected by the DC voltage detection unit 21 is less than the DC voltage control value DCT, the switch ON time DT of two-way switches 6U, 6V, 6W is increased, but if the detected DC voltage DC is greater than DC voltage control value DCT, the switch ON time DT is decreased.

As a result of the two-way switch control unit 9 operating in this way the input power factor can be improved and harmonics reduced while maintaining a stable DC output voltage from the bridge rectifier circuit 3 even when the load of the inverter circuit 24 varies or the voltage of the three-phase AC supply 1 varies.

It should be noted that the DC voltage control value DCT in this tenth embodiment input to the two-way switch control unit 9 could be a constant or a variable value, or supplied from an external source. The DC voltage control value DCT could be supplied by the inverter control unit 25, for example. In this case the compressor drive apparatus can be efficiently driven because the ideal DC output voltage can be set as the DC voltage control value DCT according to the speed of the compressor 26 and the duty ratio of the inverter circuit 24.

As described above, a direct current power supply apparatus according to the present invention reduces harmonic current in the three-phase AC power supply while improving the input power factor, and can therefore be used as a direct current power supply apparatus that can variably control the output voltage for use in a rectifier used in coating processes. In addition, a compressor drive apparatus according to the present invention can be used in air conditioners, refrigerators, and other appliances that use a compressor.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A direct current power supply apparatus for supplying direct current to a load (5), comprising:
a three-phase AC supply (1);
a bridge rectifier circuit (3) composed of six diodes;
an electrolytic capacitor (4) connected to a DC output terminal of said bridge rectifier circuit;
reactors (2U, 2V 2W) connected between said three-phase AC supply and the AC input terminal for each phase of said bridge rectifier circuit;
two-way switches (6U, 6V, 6W) disposed between said AC input terminals and said DC output terminal;
capacitors (7U, 7V, 7W) connected in series to said two-way switches;
a phase detection means (8) for detecting a specific phase of each phase voltage of said three-phase AC supply and outputting a phase detection signal; and
a two-way switch control means (9) for controlling said two-way switches based on said phase detection signal.

2. A direct current power supply apparatus as described in claim 1, wherein said specific phase is a zero voltage cross point.

3. A direct current power supply apparatus as described in claim 1, wherein said two-way switch control means controls said two-way switches according to said zero voltage cross point and an on time command denoting the timing when said two-way switches turn on.

4. A direct current power supply apparatus as described in claim 1, wherein said capacitors are inserted between the AC input terminal of each phase and said two-way switches.

5. A direct current power supply apparatus as described in claim 1, wherein one side of said two-way switches is connected to said AC input terminal and the other side is connected through a single common capacitor to said DC output terminal.

6. A direct current power supply apparatus as described in any of claims 2 to 5, further comprising a DC voltage detection means (21) for detecting the DC output voltage of said bridge rectifier circuit and outputting the DC voltage;
wherein said two-way switch control means turns said two-way switches off when said DC voltage exceeds a specific value or becomes less than a specific value.

7. A direct current power supply apparatus as described in any of claims 2 to 5; further comprising a DC voltage detection means (21) for detecting the DC output voltage of said bridge rectifier circuit and outputting the DC voltage;
wherein said two-way switch control means controls said two-way switches based on said zero voltage cross point, said detected DC voltage, and a specific DC voltage control value so that said detected DC voltage becomes equal to said DC voltage control value.

8. A direct current power supply apparatus as described in any of claims 2 to 5, further comprising a load current detection means (22) for detecting the load current flowing through said load and outputting a load current value;
wherein said two-way switch control means controls said two-way switches based on said zero voltage cross point and said load current value.

9. A direct current power supply apparatus as described in any of claims 2 to 5, further comprising an input current detection means (23) for detecting the input current to said reactors and outputting an input current value;
wherein said two-way switch control means controls said two-way switches based on said zero voltage cross point and said input current value.

10. A direct current power supply apparatus as described in any of claims 2 to 5,
wherein said phase detection means comprises:
a single-phase zero voltage cross detection means (12) for detecting the zero voltage cross point of one phase of said three-phase AC supply; and
a two-phase zero voltage cross calculation means (13) for calculating the zero voltage cross point of the other two phases from said zero voltage cross point detected by said single-phase zero voltage cross detection means.

11. A direct current power supply apparatus as described in any of claims 2 to 5,
wherein said phase detection means comprises:
a inter-line voltage zero cross detection means (18) for detecting a inter-line voltage zero cross point of said three-phase AC supply; and
a three-phase zero voltage cross calculation means (19) for calculating the zero voltage cross point of each phase from said inter-line voltage zero cross point.

12. A direct current power supply apparatus as described in any of claims 2 to 5,
wherein said reactors are a three-phase reactor composed of one core and three windings.

13. A direct current power supply apparatus as described in any of claims 2 to 5,
wherein said reactors are saturable reactors wherein inductance drops as current flow increases.

14. A compressor drive apparatus comprising a direct current power supply apparatus for converting three-phase alternating current to direct current, and an inverter, device (24, 25) for converting the direct current converted by said direct current power supply apparatus to variable voltage, variable frequency alternating current and supplying said alternating current to a compressor (26),
wherein said direct current power supply apparatus comprises:
a three-phase AC supply (1);
a bridge rectifier circuit (3) composed of six diodes;
an electrolytic capacitor (4) connected to a DC output terminal of said bridge rectifier circuit;
reactors (2U, 2V 2W) connected between said three-phase AC supply and the AC input terminal for each phase of said bridge rectifier circuit;
two-way switches (6U, 6V, 6W) disposed between said AC input terminals and said DC output terminal;
capacitors (7U, 7V, 7W) connected in series to said two-way switches;
a phase detection means (8) for detecting a specific phase of each phase voltage of said three-phase AC supply and outputting a phase detection signal; and
a two-way switch control means (9) for controlling said two-way switches based on said phase detection signal.

15. A compressor drive apparatus as described in claim 14, wherein said specific phase is a zero voltage cross point.

16. A compressor drive apparatus as described in claim 14, wherein said two-way switch control means controls said two-way switches according to said zero voltage cross point and an on time command denoting the timing when said two-way switches turn on.

17. A compressor drive apparatus as described in claim 14, wherein said capacitors are inserted between the AC input terminal of each phase and said two-way switches.

18. A compressor drive apparatus as described in claim 14, wherein one side of said two-way switches is connected to said AC input terminal and the other side is connected through a single common capacitor to said DC output terminal.

19. A compressor drive apparatus as described in any of claims 15 to 18, further comprising a DC voltage detection means (21) for detecting the DC output voltage of said bridge rectifier circuit and outputting the DC voltage;
wherein said two-way switch control means turns said two-way switches off when said DC voltage exceeds a specific value or becomes less than a specific value.

20. A compressor drive apparatus as described in any of claims 15 to 18,
wherein said two-way switch control means controls said two-way switches based on said zero voltage cross point and a speed control value set by said inverter device.

21. A compressor drive apparatus as described in any of claims 15 to 18, further comprising a speed detection means (27) for detecting the speed of said compressor;
wherein said two-way switch control means controls said two-way switches based on said zero voltage cross point and said detected speed.

22. A compressor drive apparatus as described in any of claims 15 to 18, further comprising a DC voltage detection means (21) for detecting the DC output voltage of said bridge rectifier circuit and outputting the DC voltage;
wherein said two-way switch control means controls said two-way switches based on said zero voltage cross point, said detected DC voltage, and a specific DC voltage control value so that said detected DC voltage becomes equal to said DC voltage control value.

23. A compressor drive apparatus as described in any of claims 15 to 18,
wherein said phase detection means comprises:
a single-phase zero voltage cross detection means (12) for detecting the zero voltage cross point of one phase of said three-phase AC supply; and
a two-phase zero voltage cross calculation means (13) for calculating the zero voltage cross point of the other two phases from said zero voltage cross point detected by said single-phase zero voltage cross detection means.

24. A compressor drive apparatus as described in any of claims 15 to 18,
wherein said phase detection means comprises:
a inter-line voltage zero cross detection means (18) for detecting a inter-line voltage zero cross point of said three-phase AC supply; and
a three-phase zero voltage cross calculation means (19) for calculating the zero voltage cross point of each phase from said inter-line voltage zero cross point.

25. A compressor drive apparatus as described in any of claims 15 to 18,
wherein said reactors are a three-phase reactor composed of one core and three windings.

26. A compressor drive apparatus as described in any of claims 15 to 18,
wherein said reactors are saturable reactors wherein inductance drops as current flow increases.

27. A control method for a direct current power supply apparatus, said control method being a method of controlling a direct current power supply apparatus comprising a three-phase AC supply (1), a bridge rectifier circuit (3) composed of six diodes, an electrolytic capacitor (4) connected to a DC output terminal of said bridge rectifier circuit, and reactors (2U, 2V 2W) connected between said three-phase AC supply and the AC input terminal for each phase of said bridge rectifier circuit, and said method having steps of:
detecting a specific phase of each phase voltage of said three-phase AC supply;
controlling the flow of current between said AC input terminal and said DC output terminal on and off based on said detected phase; and
charging/discharging a capacitance by switching said current flow on and off.
